Europäisches Patentamt

European Patent Office

Office européen des brevets

(19)

(11) Publication number: **0 038 623**
**B1**

(12) **EUROPEAN PATENT SPECIFICATION**

(45) Date of publication of patent specification: **24.07.85**

(21) Application number: **81301072.5**

(22) Date of filing: **13.03.81**

(51) Int. Cl.⁴: **B 05 B 5/04, F 16 C 17/03,**
**F 16 C 17/12, H 01 R 39/00**

(54) A rotary type electrostatic spray painting device.

(30) Priority: **04.04.80 JP 43451/80**
**23.05.80 JP 67913/80**

(43) Date of publication of application:
**28.10.81 Bulletin 81/43**

(45) Publication of the grant of the patent:
**24.07.85 Bulletin 85/30**

(84) Designated Contracting States:
**CH DE FR GB LI**

(56) References cited:
**BE-A- 654 767**
**DE-C- 973 478**
**FR-A-1 560 068**
**FR-A-2 336 181**
**GB-A-1 072 684**
**GB-A-1 512 381**
**US-A-2 449 138**
**US-A-3 985 405**
**US-A-4 148 932**

(73) Proprietor: **TOYOTA JIDOSHA KABUSHIKI**
**KAISHA**
**1, Toyota-cho Toyota-shi**
**Aichi-ken 471 (JP)**

(72) Inventor: **Morishita, Teru**
**187-1, Nagasawa**
**Shimizu-cho Suntou-gun Shizuoka-ken (JP)**
Inventor: **Sugiyama, Matsuyoshi**
**1321, Mishukeu**
**Susono-shi Shizuoka-ken (JP)**
Inventor: **Suzuki, Toshikazu**
**1-1, Hirayama-cho, 3-chome**
**Toyota-shi Aichi-ken (JP)**

(74) Representative: **Burnside, Michael et al**
**c/o Michael Burnside & Partners 2 Serjeants' Inn**
**Fleet Street**
**London EC4Y 1HL (GB)**

Courier Press, Leamington Spa, England.

## Description

The present invention relates to a rotary type electrostatic spray painting device.

As an electrostatic spray painting device used for painting, for example, bodies of motor cars, a rotary type electrostatic spray painting device has been known, which comprises a rotary shaft supported by ball bearings or roller bearings within the housing of the painting device, and a cup shaped spray head fixed onto the front end of the rotary shaft. In this painting device, a negative high voltage is applied to the spray head, and paint is fed onto the inner circumferential wall of the spray head. Thus, fine paint particles charged with electrons are sprayed from the spray head and are attracted by the electrical force onto the surface of the body of a motor car, which is grounded. As a result of this, the surface of the body of a motor car is painted. In such a rotary type electrostatic spray painting device, since the paint, the amount of which is about 90 percent relative to the amount of the paint sprayed from the spray head, can be efficiently used for painting the surface to be painted, the consumption of the paint is small and, as a result, a rotary type electrostatic spray painting device is used in various industries.

In order to form a beautiful finished surface when a surface is painted by using a spray paint, it is necessary to reduce the size of the particles of paint as much as possible. In the case wherein the paint is divided into fine particles by using the centrifugal force caused by the rotation of the spray head, as in a rotary type spray painting device, the strength of the centrifugal force, that is, the rotating speed of the spray head, has a great influence on the size of the particles of paint. In other words, the higher the rotating speed of the spray head becomes, the smaller the size of the particles of paint becomes. Consequently, in order to form a beautiful finished surface by using a rotary type electrostatic spray painting device, it is necessary to increase the rotating speed of the spray head as much as possible. As mentioned above, in a conventional rotary type electrostatic spray painting device, ball bearings or roller bearings are used for supporting the rotary shaft of the electrostatic spray painting device and, in addition, a lubricant, such as grease, is confined within the ball bearings or the rollers bearings. However, when such bearings, which are lubricated by grease, are rotated at a high speed, the bearings instantaneously deteriorate. Therefore, in a conventional rotary type electrostatic spray painting device adopting the bearings which are lubricated by grease, the maximum rotating speed of the rotary shaft, that is, the maximum rotating speed of the spray head, is at most 20,000 r.p.m. However, in the case wherein the rotating speed of the spray head is about 20,000 r.p.m., the size of the particles of paint is relatively large and, thus, it is difficult to form a beautiful finished surface by using such a conventional rotary type electrostatic spray painting device. In the field of manufacturing motor cars, the painting process for bodies of motor cars comprises a primary spraying step, an undercoating step, and a finish painting step. However, since it is difficult to form a beautifully finished surface by using a conventional rotary type electrostatic spray painting device as mentioned above, such a conventional rotary type electrostatic spray painting device is used for carrying out the undercoating step, but cannot be used for carrying out the finish painting step.

As a method of lubricating bearings, a jet lubricating system has been known, in which by injecting the lubricating oil of a low viscosity into the region between the inner race and the outer race of the ball or roller bearings, the friction between the balls or rollers and such races is greatly reduced and, at the same time, the heat caused by the friction is absorbed by the lubricating oil. In the case wherein the above-mentioned jet lubricating system is applied to a rotary type electrostatic spray painting device, it is possible to increase the rotating speed of the rotary shaft of the electrostatic spray painting device, as compared with the case wherein grease lubricating bearings are used. However, since the jet lubricating system requires a complicated lubricating oil feed device having a large size, it is particularly difficult to apply such a jet lubricating system to a rotary type electrostatic spray painting device. In addition, if the lubricating oil becomes mixed with the paint, the external appearance of the painted surface is damaged. Therefore, if the jet lubricating system is applied to a rotary type electrostatic spray painting device, it is necessary to completely prevent the lubricating oil from leaking into the paint. However, it is practically impossible to completely prevent the lubricating oil from leaking into the paint and, thus, it is inadvisable to apply the jet lubricating system to a rotary type electrostatic spray painting device.

In addition, as a painting device capable of reducing the size of the particles of paint to a great extent, an air injection type electrostatic spray painting device has been known, in which the paint is divided into fine particles by a stream of injection air. In this air injection type electrostatic spray painting device, since the size of the particles of sprayed paint can be reduced to a great extent, as mentioned above, it is possible to form a beautiful finished surface. Consequently, in a field of manufacturing motor cars, the air injection type electrostatic spray painting device is adopted for carrying out the finish painting step for the bodies of motor cars. However, in such an air injection type electrostatic spray painting device, since the sprayed paint impinges upon the surface to be painted together with the stream of the injection air and, then, a large amount of the sprayed paint escapes, together with the stream of the injection air, without adhering to the surface to be painted, the amount of the paint used to effectively paint the surface to be painted is about 40 percent of the amount of the paint sprayed from the electrostatic spray painting device. Consequently, in the case wherein an air injection type electrostatic spray painting device is adopted, there is a problem in that the consumption of the paint is inevitably increased. In addition, in this case, a problem occurs in that the paint escaping, together with the stream of the injection air, causes air pollution within factories.

The features in the pre-characterising clause of Claim 1 are disclosed in FR—A—2236181. GB—A—1,072,684 discloses hydrostatic non-contact type bearings. European Published Specification No. 0,034,246 comprises prior art within the meaning of Article 54(3) EPC.

An object of the present invention is to provide a rotary type electrostatic spray painting device capable of reducing the size of the particles of paint to be sprayed and reducing the quantity of paint used and more particularly to provide a stable operation at the relatively high rotational speeds of the device by stabilizing the operation of the thrust bearing of the device.

According to the present invention, there is provided a rotary type electrostatic spray painting device comprising:

a metallic housing;

a metallic rotary shaft rotatably arranged in said housing and having a front end and a rear end;

a cup shaped metallic spray head fixed onto the front end of said rotary shaft and having a cup shaped inner wall;

feeding means for feeding paint into said cup shaped inner wall;

drive means cooperating with said rotary shaft for rotating said rotary shaft;

a generator generating a negative high voltage and having an output connected to said housing; and,

electrode means arranged in said housing and electrically connecting said output to said spray head; characterised by

non-contact type radial bearing means arranged in said housing and cooperating with said rotary shaft for radially supporting and said rotary shaft under a non-contacting state;

an air source;

a stationary annular plate fixed onto said housing and having opposed side walls, said annular plate having a plurality of first air outflow bores formed on said opposed side walls;

a plurality of radially extending air passages, each being formed in said annular plate and having an outer end and an inner end which inner end is connected to said corresponding first air outflow bore, each of said outer ends being connected to said air source;

a pair of runners fixed onto said rotary shaft and arranged on each side of said annular plate, each of said runners being slightly spaced from the corresponding side wall of said annular plate; and,

said annular plate having a plurality of second air outflow bores formed on the opposed side walls thereof at a position radially outwardly spaced from said first air outflow bores, each of said second air outflow bores being connected to said corresponding air passage.

The present invention may be more fully understood from the description of preferred embodiments of the invention set forth below, together with the accompanying drawings.

In the drawings:

Fig. 1 is a cross-sectional side view of a rotary type electrostatic spray paint device of the kind to which the present invention can be applied;

Fig. 2 is a cross-sectional view taken along the line II—II in Fig. 1;

Fig. 3 is a cross-sectional view taken along the line III—III in Fig. 1;

Fig. 4 is an enlarged cross-sectional side view of the thrust bearing illustrated in Fig. 1;

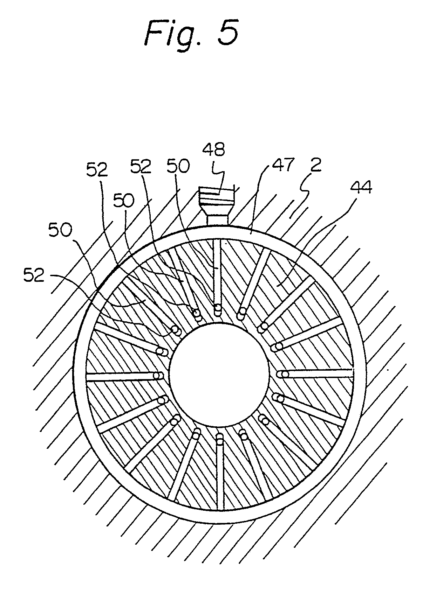

Fig. 5 is a cross-sectional view taken along the line V—V in Fig. 4;

Fig. 6 is an enlarged cross-sectional side view of an embodiment of a thrust bearing according to the present invention;

Fig. 7 is a cross-sectional view taken along the line VII—VII in Fig. 6; and

Fig. 8 is a graph showing the relationship between the size of paint particles and the rotating speed of the spray head.

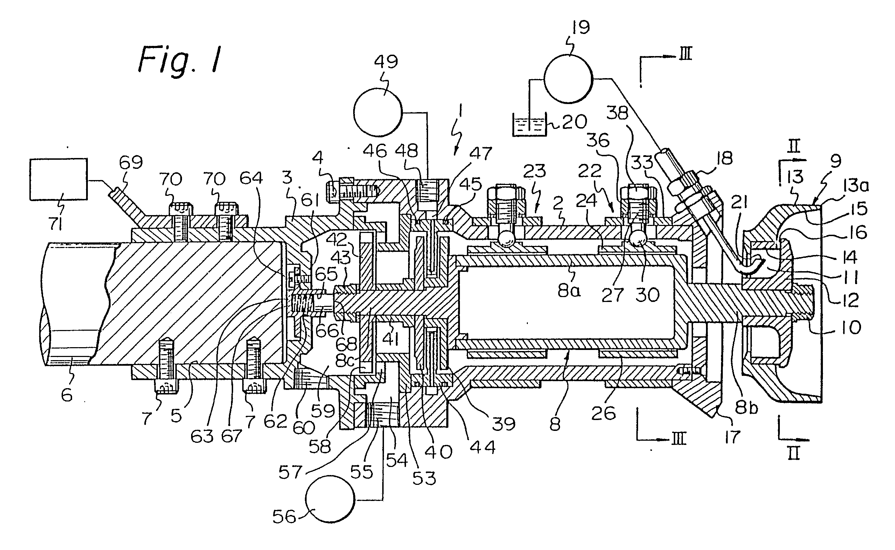

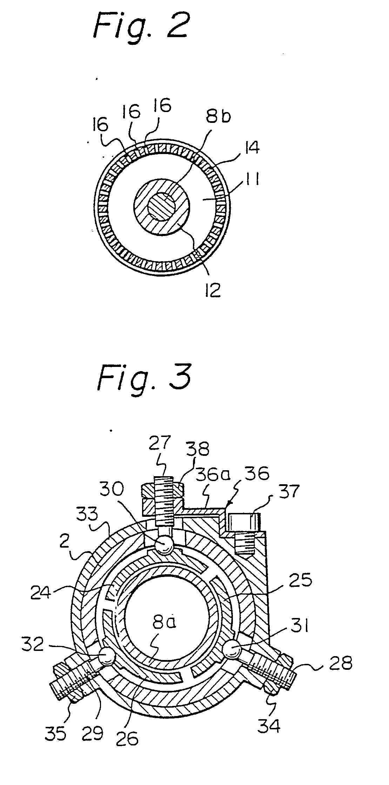

Referring to Fig. 1, a rotary type electrostatic spray painting device, generally designated by reference numeral 1, comprises a generally hollow cylindrical front housing 2 made of metallic material, and a generally hollow cylindrical rear housing 3 made of metallic material. The front housing 2 and the rear housing 3 are firmly joined to each other by bolts 4. A support rod 6, made of an electrically insulated material, is fitted into a cylindrical hole 5 formed in the rear housing 3, and this rear housing 3 is fixed onto the support rod 6 by bolts 7. The support rod 6 is supported by base (not shown). A rotary shaft 8 is inserted into the front housing 2. This rotary shaft 8 comprises a hollow cylindrical portion 8a located in the middle thereof, a shaft portion 8b formed in one piece on the front end of the hollow cylindrical portion 8a, and a shaft portion 8c fixed onto the rear end of the hollow cylindrical portion 8a. A spray head 9 made of a metallic material is fixed onto the shaft portion 8b of the rotary shaft 8 by a nut 10. The spray head 9 comprises a spray head supporting member 12 forming in an annular space 11, and a cup shaped spray head body 13 fixed onto the spray head supporting member 12. As illustrated in Figs. 1 and 2, a plurality of paint outflow bores 16, each opening into the annular space 11 and smoothly connected to an inner wall 15 of the spray head body 13, is formed in an outer cylindrical portion 14 of the spray head supporting member 12. As illustrated in Fig. 1, an end plate 17 is fixed onto the front end of the front housing 2, and a paint injector 18 is mounted on the end plate 17. The paint injector 18 is connected to a paint reservoir 20 via a paint feed pump 19, and a nozzle 21 of the paint injector 18 is directed to the cylindrical inner wall of the outer cylindrical portion 14 of the spray head supporting member 12.

A pair of non-contact type tilting pad radial air bearings 22 and 23 is arranged in the front housing 2, and the rotary shaft 8 is rotatably supported on the front housing 2 via a pair of the tilting pad radial air bearings 22 and 23. Both the tilting pad radial air bearings 22 and 23 have the same construction and, therefore, the construction of only the tilting pad radial air bearing 22 will be hereinafter described. Referring to Figs. 1 and 3 the tilting pad radial air bearing 22 comprises three pads 24, 25, 26 spaced from the outer circumferential wall of the hollow cylindrical portion 8a of the rotary shaft 8 by an extremely small distance, and three support pins 27, 28, 29 supporting the pads 24, 25, 26, respectively. Spherical tips 30, 31, 32 are formed in one piece on the inner ends of the support pins 27, 28, 29, and are in engagement with spherical recesses formed on the rear faces of the pads 24, 25, 26, respectively. Consequently, the pads 24, 25, 26 can swing about the corresponding spherical tips 30, 31, 32, each functioning as a fulcrum. A bearing support frame 33 is fixed onto the outer circumferential wall of the front housing 2 by means of, for example, bolts (not shown), and the support pins 28, 29 are fixed onto the bearing support frame 33 by means of nuts 34, 35, respectively. In addition, one end of a support arm 36 having a resilient plate shaped portion 36a is fixed onto the bearing support frame 33 by means of a bolt 37, and the other end of the support arm 36 is fixed onto the support pin 27 by means of a nut 38. Consequently, the pad 24 is urged onto the hollow cylindrical portion 8a of the rotary shaft 8 due to the resilient force of the support arm 36.

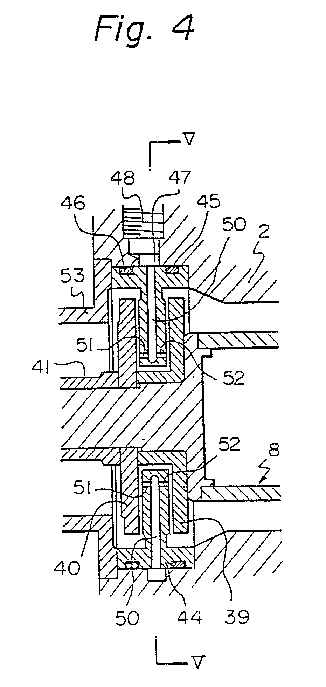

Turning to Fig. 1, a pair of disc shaped runners 39, 40 is inserted into the shaft portion 8c of the rotary shaft 8 and fixed onto the shaft portion 8c via a spacer 41 and a turbine wheel 42 by means of a nut 43. A stationary annular plate 44 is arranged between the runners 39 and 40, and the runners 39, 40 and the annular plate 44 construct a non-contact type thrust air bearing. As illustrated in Fig. 1, each of the runners 39, 40 is spaced from the annular plate 44 by a slight distance. The annular plate 44 is fixed onto the front housing 2 via a pair of 0 rings 45, 46. As illustrated in Figs. 1 and 4, an annular groove 47, extending along the outer circumferential wall of the annular plate 44, is formed on the cylindrical inner wall of the front housing 2 and connected to an air feed pump 49 via a compressed air supply hole 48 which is formed in the front housing 2. A plurality of air passages 50, each extending radially inwardly from the annular groove 47, is formed in the annular plate 44. In addition, a plurality of air outflow bores 51, each extending towards the runner 40 from the inner end portion of the corresponding air passage 50, is formed in the annular plate 44, and a plurality of air outflow bores 52, each extending towards the runner 39 from the inner end portion of the corresponding air passage 50, is formed in the annular plate 44.

As illustrated in Fig. 1, a turbine nozzle holder 53 is fixed onto the front housing 2 at a position adjacent to the annular plate 44, and an annular air supply chamber 54 is formed between the turbine nozzle holder 53 and the front housing 2. The air supply chamber 54 is connected to a compressor 56 via a compressed air supply hole 55. The air supply chamber 54 comprises a compressed air injecting nozzle 57 having a plurality of guide vanes (not shown), and turbine blades 58 of the turbine wheel 42 are arranged to face the compressed air injecting nozzle 57. A housing interior chamber 59, in which the turbine wheel 42 is arranged, is connected to the atmosphere via a discharge hole 60 which is formed in the rear housing 3. The compressed air fed into the air supply chamber 54 from the compressor 56 is injected into the housing interior chamber 59 via the compressed air injecting nozzle 57. At this time, the compressed air injected from the injecting nozzle 57 provides the rotational force for the turbine wheel 42 and, thus, the rotary shaft 8 is rotated at a high speed. Then, the compressed air injected from the injecting nozzle 57 is discharged to the atmosphere via the discharge hole 60.

A through-hole 62 is formed on an end wall 61 of the rear housing 3, which defines the housing interior chamber 59, and an electrode holder 63 extending through the through hole 62 is fixed onto the end wall 61 by means of bolts 64. A cylindrical hole 65 is formed coaxially with the rotation axis of the rotary shaft 8 in the electrode holder 63, and a cylindrical electrode 66, made of wear resisting materials such as carbon, is inserted into the cylindrical hole 65 so as to be movable therein. In addition, a compression spring 67 is inserted between the electrode 66 and the electrode holder 63 so that the tip face 68 of the electrode 66 is urged onto the end face of the shaft portion 8c of the rotary shaft 8 due to the spring force of the compression spring 67. An external terminal 69 is fixed onto the outer wall of the rear housing 3 by means of bolts 70 and connected to a high voltage generator 71 used for generating a negative high voltage ranging from −60 kV to −90 kV. Consequently, the negative high voltage is applied to both the front housing 2 and the rear housing 3, and it is also applied to the spray head 9 via the electrode 66 and the rotary shaft 8.

In operation, paint is injected from the nozzle 21 of the paint injector 18 onto the circumferential inner wall of the outer cylindrical portion 14 of the spray head supporting member 12. Then, the paint, injected onto the circumferential inner wall of the outer cylindrical portion 14, flows out onto the inner wall 15 of the spray head body 13 via the paint outflow bores 16 due to the centrifugal force caused by the rotation of the spray head 9. After this, the paint spreads on the inner wall 15 of the spray head body 13 and flows on the inner wall 15 in the form of a thin film. Then, the paint reaches the tip 13a of the spray head body 13. As mentioned previously, a negative high voltage is applied to the spray head 9. Consequently, when the paint is sprayed from the tip 13a of the spray head body 13 in the form of fine particles, the particles of the sprayed paint are charged with electrons. Since the surface to be painted is normally grounded, the paint particles charged with electrons are attracted towards the surface to be painted due to electrical force and, thus, the surface to be painted is painted.

As mentioned previously, the rotary shaft 8 is supported by a pair of tilting pad radial air bearings 22, 23 and a single thrust air bearing which is constructed by the runners 39, 40 and the stationary annular plate 44. In the tilting pad radial air bearings 22, 23, when the rotary shaft 8 is rotated, ambient air is sucked into the extremely small clearances formed between the hollow cylindrical portion 8a and the pads 24, 25, 26. Then, the air thus sucked is compressed between the hollow cylindrical portion 8a and the pads 24, 25, 26 due to a so-called wedge effect of air, and therefore, the pressure of the air between the hollow cylindrical portion 8a and the pads 24, 25, 26 is increased. As a result of this, the force radially supporting the rotary shaft 8 is generated between the hollow cylindrical portion 8a and the pads 24, 25, 26. On the other hand, in the above-mentioned thrust air bearing, compressed air is fed into the air passages 50 from the air feed pumps 49 via the annular groove 47. Then, the compressed air is injected from the air outflow bores 51 into the clearances between the annular plate 44 and the runner 40, and also, injected from the air outflow bores 52 into the clearance between the annular plate 44 and the runner 39. As a result of this, the pressure, which is necessary to maintain the above-mentioned clearances formed on each side of the annular plate 44, is generated between the annular plate 44 and the runners 39, 40. Consequently, the rotary shaft 8 is supported by the thrust air bearing and a pair of the radial air bearings under a non-contacting state via a thin air layer. As is known to those skilled in the art, the coefficient of viscosity of air is about one thousandth of that of the viscosity of lubricating oil. Consequently, the frictional loss in the air bearing, which uses air as a lubricant, is extremely small. Therefore, since the amount of heat caused by the occurrence of the frictional loss is extremely small, it is possible to increase the rotating speed of the rotary shaft 8 to a great extent. In the embodiment illustrated in Fig. 1, it is possible to rotate the rotary shaft 8 at a high speed of about 80,000 r.p.m. In addition, the annular plate 44, constructing a portion of the thrust bearing, is formed by a single flat plate. Consequently, it is possible to shorten the axial length of the thrust bearing and, thus, it is possible to reduce the size of the rotary type electrostatic spray painting device as a whole. Furthermore, since the axial length of the thrust bearing is shortened, the number of revolutions of the rotary shaft 8, which causes a self-exciting vibration of the rotary shaft 8, can be increased and, as a result, it is possible to ensure a stable operation of the rotary type electrostatic spray painting device within a range of rotating speed from a low speed to a high speed of about 80,000 r.p.m. In addition, since the annular plate 44 is formed by a single plate, the clearances between the annular plate 44 and the runners 39, 40, which have a great influence on the performance of the thrust bearing, can be easily and precisely equalized to a predetermined size.

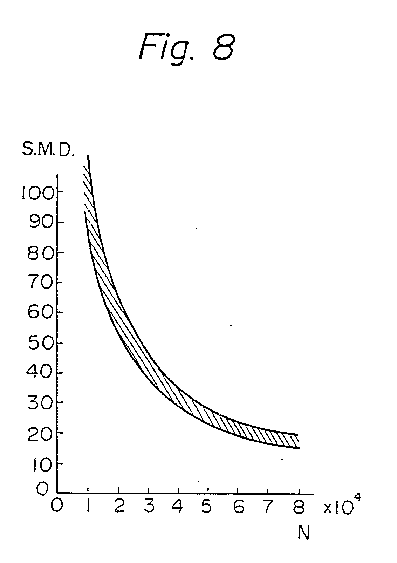

Fig. 8 illustrates the relationship between the size of the particles of sprayed paint and the rotating speed of the spray head in the case wherein the spray head 9 (Fig. 1) having a diameter of 75 mm is used. In Fig. 8, the ordinate S.M.D. indicates the mean diameter (μm) of paint particles, which is indicated in the form of a Sauter mean diameter, and the abscissa N indicates the number of revolutions per minute (r.p.m.) of the spray head 9. As mentioned previously, in a conventional rotary type electrostatic spray painting device, the maximum number of revolutions per minute N of the spray head is about 20,000 r.p.m. Consequently, from Fig. 8, it will be understood that, if the spray head having a diameter of 75 mm is used in a conventional rotary type electrostatic spray painting device, the minimum mean diameter S.M.D. of paint particles is in the range of 55 μm to 65 μm. Contrary to this, in the present invention, the maximum number of revolutions per minute N is about 80,000 r.p.m. Consequently, from Fig. 8, it will be understood that the paint can be divided into fine particles to such a degree that the mean diameter S.M.D. of paint particles is in the range of 15 μm to 20 μm. Therefore, it will be understood that, in a rotary type electrostatic spray painting device according to the present invention, the size of paint particles can be greatly reduced, as compared with that of paint particles in a conventional rotary type spray painting device. In addition, as mentioned previously, the same negative high voltage is applied to the housings 2, 3 and the rotary shaft 8. Consequently, there is no danger that an electric discharge will occur between the housings 2, 3 and the rotary shaft 8.

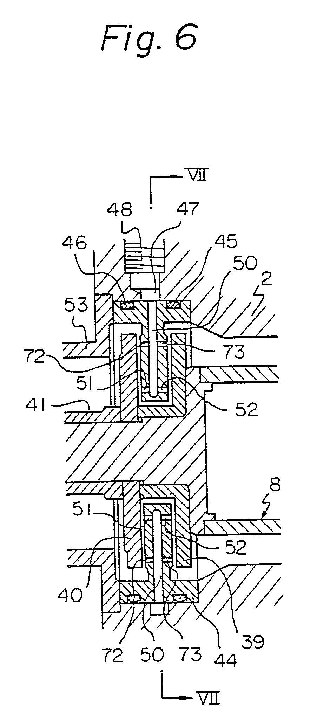

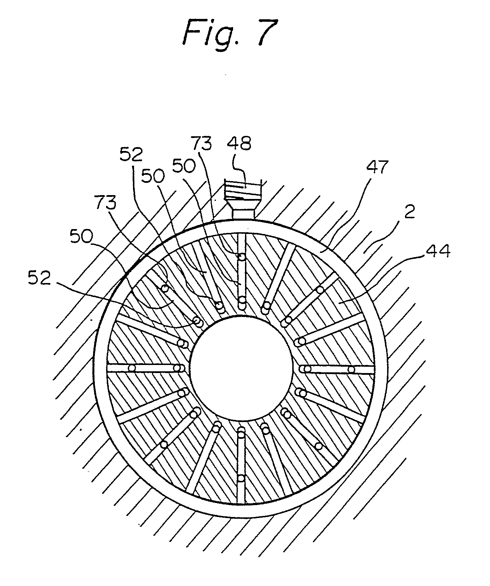

Figs. 6 and 7 illustrate an embodiment of the invention. In this embodiment, other air outflow bores 72, 73 are formed in the annular plate 44 at a position radially outwardly spaced from the air outflow bores 51, 52. One end of the air outflow bores 72 opens towards the peripheral portion of the side wall of the runner 40, and the other ends of the air outflow bores 72 are connected to the corresponding air passages 50. In addition, one end of the air outflow bores 73 opens towards the peripheral portion of the side wall of the runner 39, and the other ends of the air outflow bores 73 are connected to the air passages 50. Furthermore, as will be understood from Fig. 7, the air outflow bores 72, 73 are alternately provided for the air passages 50. Consequently, in this embodiment, air flows out from the air outflow bores 72, 73 in addition to the air flowing out from the air outflow bores 51, 52. In the case wherein the axis of the rotary shaft 8 is inclined with respect to the regular rotation axis, air, flowing out from the air outflow bores 72, 73, provides the runners 39, 40 with a great force which causes the axis of the rotary shaft 8 to return to the regular rotation axis and therefore, the air, flowing out from the air outflow bores 72, 73, serves to prevent the runners 39, 40 from contacting the annular plate 44.

According to the present invention, since the spray head can be rotated at a high speed of about 80,000 r.p.m., the size of the particles of sprayed paint can be reduced to a great extent. As a result of this, the size of paint particles becomes smaller than that of paint particles obtained by using a conventional air injection type electrostatic spray painting device. Consequently, in the present invention, it is possible to obtain an extremely beautiful finished surface and, therefore, a rotary type electrostatic spray painting device can be used for carrying out a finish painting step in the paint process for example, for bodies of motor cars. In addition, in the present invention, since paint particles are created by rotating the spray head at a high speed, but are not created by air injection, the amount of the paint used to effectively paint the surface to be painted is about 90 percent of the amount of the paint sprayed from a rotary type electrostatic spray painting device. Consequently, since a large part of the sprayed paint is not dispersed within the factory, it is possible to prevent the problem of air pollution from arising. In addition, the amount of paint used can be reduced.

**Claims**

1. A rotary type electrostatic spray painting device comprising:

a metallic housing (2, 3);

a metallic rotary shaft (8) rotatably arranged in said housing and having a front end (8b) and a rear end (8c);

a cup shaped metallic spray head (9) fixed onto the front end (8b) of said rotary shaft and having a cup shaped inner wall (15);

feeding means (18) for feeding paint onto said cup shaped inner wall;

drive means (42) cooperating with said rotary shaft for rotating said rotary shaft;

a generator (71) generating a negative high voltage and having an output (69) connected to said housing; and,

electrode means (66) arranged in said housing and electrically connecting said output to said spray head; characterised by

non-contact type radial bearing means (22, 23) arranged in said housing and cooperating with said rotary shaft for radially supporting said rotary shaft under a non-contacting state;

an air source (49);

a stationary annular plate (44) fixed onto housing (2) and having opposed side walls, said annular plate having a plurality of first air outflow bores (51, 52) formed on said opposed side walls;

a plurality of radially extending air passages (50), each being formed in said annular plate and having an outer end and an inner end which inner end is connected to said corresponding first air outflow bore (51, 52), each of said outer ends being connected to said air source (49);

a pair of runners (39, 40) fixed onto said rotary shaft (8) and arranged on each side of said annular plate, each of said runners being slightly spaced from the corresponding side wall of said annular plate; and,

said annular plate (44) having a plurality of second air outflow bores (72, 73) formed on the opposed side walls thereof at a position radially outwardly spaced from said first air outflow bores (51, 52), each of said second air outflow bores being connected to said corresponding air passage (50).

2. A rotary type electrostatic spray painting device as claimed in Claim 1, wherein one pair of said second air outflow bores (72, 73) is provided connected to each alternate air passage (50).

3. A rotary type electrostatic spray painting device as claimed in Claim 1 or Claim 2, wherein said housing (2) has a cylindrical inner wall portion, and said annular plate (44) has an outer circumferential wall which is inserted into said cylindrical inner wall portion, an annular groove (47) being formed on said cylindrical inner wall portion along the outer circumferential wall of said annular plate and connected to said air source (49), the outer ends of said air passages (50) being open to said annular groove.

4. A rotary type electrostatic spray painting device as claimed in Claim 3, wherein a pair of O-rings (45, 46) are inserted between the cylindrical inner wall portion of said housing and the outer circumferential wall of said annular plate and arranged on each side of said annular groove (47).

5. A rotary type electrostatic spray painting device as claimed in any of Claims 1 to 4, wherein said non-contact type radial bearing means comprises a pair of radial air bearings (22, 23).

6. A rotary type electrostatic spray painting device as claimed in Claim 5, wherein each of said radial air bearings (22, 23) comprise a bearing frame (33) connected to said housing, a plurality of pads (24, 25, 26), each having an inner face which extends along a circumferential outer wall of said rotary shaft and spaced from the circumferential outer wall of said rotary shaft by a slight distance, and a plurality of support pins (27, 28, 29), each being connected to said bearing frame and pivotally supporting said corresponding pad.

7. A rotary type electrostatic spray painting device as claimed in Claim 6, wherein each of said radial air bearings further comprises a resilient arm (36) through which one of said support pins is connected to said bearing frame for biasing said corresponding pad to the circumferential outer wall of said rotary shaft.

8. A rotary type electrostatic spray painting device as claimed in Claim 6 or Claim 7, wherein each of said pads (24, 25, 26) has an outer wall forming a spherical recess thereon, each of said support pins (27, 28, 29) having a spherical tip (30, 31, 32) which is in engagement with the spherical recess of said corresponding pad.

9. A rotary type electrostatic spray painting device as claimed in any of Claims 1 to 8, wherein said electrode means comprises an electrode (66) which is arranged to continuously contact with the rear end of said rotary shaft (8).

10. A rotary type electrostatic spray painting device as claimed in Claim 9, wherein said electrode (66) is made of carbon.

11. A rotary type electrostatic spray painting device as claimed in Claim 9 or Claim 10, wherein the rear end (8c) of said rotary shaft has a flat end face extending perpendicular to the rotation axis of said rotary shaft, said electrode (66) being arranged coaxially with the rotation axis of said rotary shaft and having a flat end face (68) which is in contact with the flat end face of the rear end (8c) of said rotary shaft.

12. A rotary type electrostatic spray painting device as claimed in any of Claims 9—11, wherein said electrode means further comprises an electrode holder (63) fixed onto said housing and having therein a cylindrical hole (65), into which said electrode (66) is slidably inserted, and a compression spring (67) arranged in the cylindrical hole of said electrode holder between said electrode holder and said electrode.

13. A rotary type electrostatic spray painting device as claimed in any of Claims 1—12, wherein said drive means comprises a compressor (56), an air injection nozzle arranged in said housing and connected to said compressor, and a turbine wheel (42) fixed onto said rotary shaft and having a turbine blade which is arranged to face said air injection nozzle.

14. A rotary type electrostatic spray painting device as claimed in any of Claims 1—13, wherein said cup shaped spray head (9) comprises a cylindrical inner wall (14) arranged coaxially with the rotation axis of said rotary shaft and defining therein an annular space (11), a plurality of paint outflow bores (16) being formed in the cylindrical inner wall of said spray head and smoothly connected to the cup shaped inner wall of said spray head, said feed means having a paint injection nozzle (21) which is arranged in said annular space (11).

**Revendications**

1. Dispositif de peinture par pulvérisation électrostatique de type rotatif comprenant:
— un carter métallique (2, 3);
— un arbre tournant métallique (8) disposé de façon tournante dans ledit carter et comportant une extrémité avant (8b) et une extrémité arrière (8c);
— une tête métallique de pulvérisation (9) en forme de cuvette, fixée sur l'extrémité avant (8b) dudit arbre tournant et comportant une paroi intérieure en forme de cuvette (15);
— un moyen distributeur (18) pour distribuer de la peinture sur ladite paroi intérieure en forme de cuvette;
— un moyen d'entraînement (42) coopérant avec ledit arbre tournant pour faire tourner cet arbre tournant;
— un générateur (71) produisant une haute tension négative et comportant une sortie (69) reliée audit carter; et
— un moyen à électrode (66) disposée dans ledit carter et reliant électriquement ladite sortie à ladite tête de pulvérisation, caractérisé par:
— des paliers radiaux de type sans contact (22, 23) disposés dans ledit carter et coopérant avec ledit arbre tournant pour supporter radialement ledit arbre tournant dans une condition d'absence de contact;
— une source d'air (49);
— une plaque annulaire stationnaire (44) fixée sur ledit carter (2) et comportant des parois latérales opposées, ladite plaque annulaire comportant une pluralité de premiers orifices de sortie d'air (51, 52) formés dans lesdites parois latérales opposées;
— une pluralité de passages d'air s'étendant radialement (50), chacun étant formé dans ladite plaque annulaire et comportant une extrémité extérieure et une extrémité intérieure, cette extrémité intérieure étant reliée au premier orifice de sortie d'air correspondant (51, 52), chacune desdites extrémités extérieures étant reliée à ladite source d'air (49);
— une paire de flasques (39, 40) fixés sur ledit arbre tournant (8) et disposés de chaque côté de ladite plaque annulaire, chacun desdits flasques étant légèrement espacés. de la paroi latérale correspondante de ladite plaque annulaire;
— ladite plaque annulaire (44) comportant une pluralité de seconds orifices de sortie d'air (72, 73) ménagés dans les parois latérales opposées dans une position espacée radialement vers l'extérieur desdits premiers orifices de sortie d'air (51, 52), chacun desdits seconds orifices de sortie d'air étant reliés audit passage d'air correspondant (50).

2. Dispositif ·de peinture par pulvérisation électrostatique de type rotatif comme revendiqué dans la revendication 1, dans lequel chaque paire de seconds orifices de sortie d'air (72, 73) est reliée à chaque second passage d'air (50).

3. Dispositif de peinture par pulvérisation électrostatique de type rotatif comme revendiqué dans la revendication 1 ou la revendication 2, dans lequel ledit carter (2) comporte une partie de paroi intérieure cylindrique et ladite plaque annulaire (44) comporte une paroi circonférentielle extérieure qui est insérée dans ladite partie de paroi intérieure cylindrique, une gorge (47) étant formée sur ladite partie de paroi intérieure cylindrique le long de la paroi circonférentielle extérieure de ladite plaque annulaire et étant reliée à ladite source d'air (49), les extrémités extérieures desdits passages d'air (50) débouchant dans ladite gorge.

4. Dispositif de peinture par pulvérisation électrostatique de type rotatif comme revendiqué dans la revendication 3, dans lequel une paire de bagues toriques (45, 46) sont interposées entre la partie de paroi intérieure cylindrique dudit carter et la paroi circonférentielle extérieure de ladite plaque annulaire et sont disposées de chaque côté de ladite gorge (47).

5. Dispositif de peinture par pulvérisation électrostatique de type rotatif comme revendiqué dans une quelconque des revendications 1 à 4, dans lequel lesdits paliers radiaux du type sans contact comprennent une paire de paliers pneumatiques radiaux (22, 23).

6. Dispositif de peinture par pulvérisation électrostatique de type rotatif comme revendiqué dans la revendication 5, dans lequel chacun desdits paliers pneumatiques radiaux (22, 23) comprend un support de palier (33) relié audit carter, une pluralité de patins (24, 25, 26) comportant chacun une face intérieure qui s'étend le long d'une paroi extérieure circonférentielle dudit arbre tournant et qui est espacée de ladite paroi extérieure circonférentielle dudit arbre tournant d'une légère distance, et une pluralité de pivots porteurs (27, 28, 29) qui sont chacun reliés audit support de paliers et qui supportent de façon pivotante ledit patin correspondant.

7. Dispositif de peinture par pulvérisation électrostatique de type rotatif comme revendiqué dans la revendication 6, dans lequel chacun desdits paliers pneumatiques radiaux comprend en outre un bras élastique (36) par l'intermédiaire duquel un desdits pivots porteurs est relié audit support de paliers pour pousser le patin correspondant vers la paroi circonférentielle extérieure dudit arbre tournant.

8. Dispositif de peinture par pulvérisation électrostatique de type rotatif comme revendiqué dans la revendication 6 ou la revendication 7, dans lequel chacun desdits patins (24, 25, 26) comporte une paroi extérieure formant un évidement sphérique, chacun desdits pivots porteurs (27, 28, 29) comportant un embout sphérique (30, 31, 32) qui est engagé dans l'évidement sphérique du patin correspondant.

9. Dispositif de peinture par pulvérisation électrostatique de type rotatif comme revendiqué dans une quelconque des revendications 1 à 8, dans lequel ledit moyen à électrode comprend une électrode (66) qui est disposé de façon à être continuellement en contact avec l'extrémité arrière dudit arbre tournant (8).

10. Dispositif de peinture par pulvérisation électrostatique de type rotatif comme revendiqué dans la revendication 9, dans lequel ladite électrode (66) est formée de carbone.

11. Dispositif de peinture par pulvérisation électrostatique de type rotatif comme revendiqué dans la revendication 9 ou la revendication 10, dans lequel l'extrémité arrière (8c) dudit arbre tournant comportant une face extrême plate s'étendant perpendiculairement à l'axe de rotation dudit arbre tournant, ladite électrode (66) étant disposée coaxialement à l'axe de rotation dudit arbre tournant et comportant une face extrême plate (68) qui est en contact avec la face extrême plate de l'extrémité arrière (8c) dudit arbre tournant.

12. Dispositif de peinture par pulvérisation électrostatique de type rotatif comme revendiqué dans une quelconque des revendications 9 à 11, dans lequel ledit moyen à électrode comprend en outre un porte-électrodes (63) fixé sur ledit carter et dans lequel est ménagé un trou cylindrique (65) dans lequel ladite électrode (66) est insérée de façon coulissante, et un ressort de compression (67) placé dans le trou cylindrique dudit porte-électrode entre ledit porte-électrode et ladite électrode.

13. Dispositif de peinture par pulvérisation électrostatique de type rotatif comme revendiqué dans une quelconque des revendications 1 à 12, dans lequel le moyen d'entraînement comprend un compresseur (56), une buse d'injection d'air disposée dans ledit carter et reliée audit compresseur, et une roue de turbine (42) fixée sur ledit arbre tournant et comportant une ailette qui est disposée en regard de ladite buse d'injection d'air.

14. Dispositif de peinture par pulvérisation électrostatique de type rotatif comme revendiqué dans une quelconque des revendications 1 à 13, dans lequel ladite tête de pulvérisation en forme de cuvette (9) comprend une paroi intérieure cylindrique (14) disposée coaxialement à l'axe de rotation dudit arbre tournant et définissant un intervalle annulaire (11), une pluralité d'orifices de sortie de peinture (16) étant ménagée dans la paroi intérieure cylindrique de ladite tête de pulvérisation et étant reliée graduellement à la paroi intérieure en forme de cuvette de ladite tête de pulvérisation, lesdits moyens de distribution comportant une buse d'injection de peinture (21) qui est disposée dans ledit intervalle annulaire (11).

## Patentansprüche

1. Elektrostatische Dreh-Spritzlackiervorrichtung mit einem Metallgehäuse (2,3), einer drehbar im Gehäuse angeordneten metallischen Rotationswelle (8) mit einer Vorderseite (8b) und einer Hinterseite (8c), einem becherförmigen metallischen Spritzkopf (9), der auf der Vorderseite (8b) der Rotationswelle befestigt ist und eine becherförmige Innenwand (15) aufweist, einer Beschickungsvorrichtung (18) zur Zufuhr von Farbe auf die becherförmige Innenwand, einer Antriebsvorrichtung (42), die zur Drehung der Rotationswelle auf die Rotationswelle einwirkt, einem eine hohe negative Spannung erzeugenden Generator (71) mit einem mit dem Gehäuse verbundenen Ausgang (69) und einem im Gehäuse angeordneten Elektrodenelement (66), das den Ausgang elektrisch mit dem Sprühkopf verbindet, gekennzeichnet durch Radiallagerelemente (22, 23) mit sich nicht berührenden Lagerflächen, die im Gehäuse angeordnet sind und derart mit der Rotationswelle zusammenwirken, daß sie die Rotationswelle ohne gegenseitige Berührungsflächen radial lagern, eine Luftquelle (49), eine ortsfeste ringförmige Platte (44) die am Gehäuse (2) befestigt ist und zwei gegenüberliegende Seitenwände aufweist, wobei die ringförmige Platte mit einer Vielzahl erster Luftaustrittsbohrungen (51, 52) versehen ist, die auf den gegenüberliegenden Seitenwänden ausgebildet sind, eine Vielzahl sich radial ausdehnender Luftkanäle (50), die jeweils in der ringförmigen Platte ausgebildet sind und ein äußeres Ende sowie ein inneres Ende aufweisen, wobei das innere Ende mit der entsprechenden ersten Luftaustrittsbohrung (51, 52) und jedes äußere Ende mit der Luftquelle (49) verbunden ist, ein paar auf der Rotationswelle (8) befestigter Läufer (39, 40) die auf jeweils einer Seite der ringförmigen Platte angeordnet sind, wobei jeder Läufer in einem kleinen Abstand zu der entsprechenden Seitenwand der ringförmigen Platte angeordnet ist, und eine Vielzahl auf der ringförmigen Platte (44) ausgebildeter zweiter Luftaustrittsbohrungen (72, 73), die in den gegenüberliegenden Seitenwänden der ringförmigen Platte radial auswärts im Abstand zu den ersten Luftaustrittsbohrungen (51, 52) ausgebildet sind, wobei jede zweite Luftaustrittsbohrung mit dem entsprechenden Luftkanal (50) verbunden ist.

2. Elektrostatische Dreh-Spritzlackiervorrichtung nach Anspruch 1, bei der ein Paar zweiter Luftaustrittsbohrungen (72, 73) mit jedem alternierenden Luftkanal (50) verbunden ist.

3. Elektrostatische Dreh-Spritzlackiervorrichtung nach Anspruch 1 oder 2, bei der das Gehäuse (2) einen zylindrischen Innenwandabschnitt aufweist, die ringförmige Platte (44) eine äußere Umfangswand aufweist, die in den zylindrischen Innenwandabschnitt eingesetzt ist, wobei eine Ringnut (27) längs der Außenumfangsfläche der ringförmigen Platte auf dem zylindrischen Innenwandabschnitt ausgebildet und mit der Luftquelle (49) verbinden ist und sich die äußeren Enden der Luftkanäle (50) in die Ringnut öffnen.

4. Elektrostatische Dreh-Spritzlackiervorrichtung nach Anspruch 3, bei der ein Paar Greifringe (45, 46) zwischen dem zylindrischen Innenwandabschnitt des Gehäuses und der Außenumfangsfläche der ringförmigen Platte eingesetzt und auf jeder Seite der Ringnut (47) angeordnet sind.

5. Elektrostatische Dreh-Spritzlackiervorrichtung nach einem der Ansprüche 1 bis 4, bei der die Radiallagerelemente mit sich nicht berührenden Lagerflächen ein Paar Radialluftlager (22, 23) aufweisen.

6. Elektrostatische Dreh-Spritzlackiervorrichtung nach Anspruch 5, bei der jedes Radialluftlager (22, 23) einen mit dem Gehäuse verbundenen Lagerrahmen (33) aufweist, sowie eine Vielzahl Futter (24, 25, 26) die je eine Innenfläche aufweisen, die sich längs der Außenumfangsfläche der Rotationswelle ausdehnen und durch einen kleinen Abstand von der Außenumfangsfläche der Rotationswelle entfernt sind, und eine Vielzahl Haltestifte (27, 28, 29), die jeweils mit dem Lagerrahmen verbunden sind und die entsprechenden Futter zentral lagern.

7. Elektrostatische Dreh-Spritzlackiervorrichtung nach Anspruch 6, bei der jedes Radialluftlager weiterhin einen federnden Träger (36) aufweist, durch den einer der Lagerstifte zur Vorspannung des entsprechenden Futters gegen die Außenumfangswand der Rotationswelle mit dem Lagerrahmen verbunden ist.

8. Elektrostatische Dreh-Spritzlackiervorrichtung nach Anspruch 6 oder 7, bei der jedes Futter (24, 25, 26) eine Außenwand mit einer kugeligen Ausnehmung darauf aufweist, wobei jeder Lagerstift (27, 28, 29) eine kugelige Spitze (30, 31, 32) aufweist, die in Eingriff mit der kugeligen Ausnehmung des entsprechenden Futters ist.

9. Elektrostatische Dreh-Spritzlackiervorrichtung nach einem der Ansprüche 1 bis 8, bei der das Elektrodenelement eine Elektrode (66) aufweist, die derart angeordnet ist, daß sie ständig in Berührung mit dem Hinterende der Rotationswelle (8) ist.

10. Elektrostatische Dreh-Spritzlackiervorrichtung nach Anspruch 9, bei der die Elektrode (66) aus Kohlenstoff hergestellt ist.

11. Elektrostatische Dreh-Spritzlackiervorrichtung nach Anspruch 9 oder 10, bei der das Hinterende (8c) der Rotationswelle eine ebene Abschlußfläche aufweist, die senkrecht zur Rotationsachse der Rotationswelle orientiert ist, wobei die Elektrode (66) koaxial zur Rotationsachse der Rotationswelle angeordnet ist und eine ebene Abschlußfläche (68) aufweist, die in Berührung mit der ebenen Abschlußfläche des Hinterendes (8c) der Rotationswelle steht.

12. Elektrostatische Dreh-Spritzlackiervorrichtung nach einem der Ansprüche 9 bis 11, bei der das Elektrodenelement weiterhin einen an dem Gehäuse befestigten Elektrodenhalter (63) aufweist, der in sich mit einer zylindrischen Bohrung (65) versehen ist, in die die Elektrode (66) verschiebbar eingesetzt ist, sowie eine Druckfeder (67) die in der zylindrischen Bohrung des Elektrodenhalters zwischen dem Elektrodenhalter und der Elektrode angeordnet ist.

13. Elektrostatische Dreh-Spritzlackiervorrichtung nach einem der Ansprüche 1 bis 12, bei der die Anstriebsvorrichtung einen Kompressor (56) aufweist, sowie eine Drucklufteinspritzdüse, die im Gehäuse angeordnet und mit dem Kompressor verbunden ist, und ein Kreiselrad (42), das auf der Rotationswelle befestigt ist und eine Turbinenschaufel aufweist, die derart angeordnet ist, daß sie der Drucklufteinspritzdüse gegenüberliegt.

14. Elektrostatische Dreh-Spritzlackiervorrichtung nach einem der Ansprüche 1 bis 13, bei der der becherförmige Spritzkopf (9) eine zylindrische Innenwand (14) aufweist, die koaxial zur Rotationsachse der Rotationswelle angeordnet ist und in sich einen Ringraum (11) definiert, sowie eine Vielzahl Farbdurchlaßbohrungen (16) die in der zylindrischen Innenwand des Spritzkopfes ausgebildet und gleichmäßig mit der becherförmigen Innenwand des Spritzkopfes verbunden sind, wobei die Beschickungsvorrichtung eine Farbeinspritzdüse aufweist, die innerhalb des Ringraums (11) angeordnet ist.

Fig. 1

# Fig. 2

# Fig. 3

# Fig. 4

## Fig. 5

# Fig. 6

# Fig. 7

*Fig. 8*